# EUROPEAN PATENT SPECIFICATION

(11) **EP 0 817 906 B1**
(45) Date of publication and mention of the grant of the patent: **30.12.1998**
(21) Application number: 96906858.4
(22) Date of filing: 14.03.1996
(51) Int. Cl.: F02B 29/00, F02B 31/00

(54) **LEAN BURN INTERNAL COMBUSTION ENGINE**
BRENNKRAFTMASCHINE MIT VERBRENNUNG EINES ARMEN GEMISCHES
MOTEUR A COMBUSTION INTERNE A MELANGE PAUVRE

(30) Priority: 31.03.1995 GB 9506690
(43) Date of publication of application: 14.01.1998
(73) Proprietor: FORD MOTOR COMPANY LIMITED, Brentwood, Essex CM13 3BW (GB); FORD-WERKE AKTIENGESELLSCHAFT, 50735 Köln (DE); FORD FRANCE S. A., 92506 Rueil-Malmaison Cédex (FR)
(72) Inventor: MA, Thomas, Tsoi-Hei, Essex CM3 5YB (GB)
(74) Representative: Messulam, Alec Moses
(86) International application number: GB9600608
(87) International publication number: WO9630634

(56) References cited:
- EP-A- 0 268 914
- WO-A-95/22687
- FR-A- 1 517 920
- GB-A- 2 114 221
- US-A- 4 445 473

## Description

### Field of the invention

The present invention relates to a multi-cylinder internal combustion engine.

### Background of the invention

It has previously been proposed by the present inventor to provide a multi-cylinder internal combustion engine having two intake port branches supplying each intake valve, the first branch being connected to the common plenum of an air supply manifold connected to ambient air by a supply throttle and the second branch being connected to the common plenum of a charge storage manifold, wherein in use air is drawn from the supply manifold and is stored in the branch of the storage manifold when the associated intake valve is closed and fuel is injected directly into the intake port, downstream of the connection between the two branches. The second manifold, which is herein referred to as a charge storage manifold, places the intake ports of all the engine cylinders under vacuum at all times, even when the intake valve of a particular cylinder is closed. As a result, air is drawn in steadily from each branch of the supply manifold during all four strokes of the engine cycle and the air that is drawn in while the intake valve is closed is stored in the associated branch of the second manifold.

The above intake system has been proposed for the purpose of creating a stratified column in the branch of the storage manifold with the aim of achieving charge stratification within the combustion chamber.

### Object of the invention

The present invention seeks to provide a variation of this type of intake system that is particularly well suited to a lean burn engine, in that it improves charge preparation and combustion quality.

### Summary of the invention

According to the present invention, there is provided a multi-cylinder internal combustion engine having two intake port branches supplying each intake valve, the first branch being connected to the common plenum of an air supply manifold connected to ambient air by a supply throttle and the second branch being connected to the common plenum of a charge storage manifold, wherein in use air is drawn from the supply manifold and is stored in the branch of the storage manifold when the associated intake valve is closed and fuel is injected directly into the intake port, downstream of the connection between the two branches, wherein the connection between the branches of the two manifolds is such that the air drawn from the first branch into the second branch swirls while in storage, the connection being designed to ensure that the axis of the swirl is parallel to the axis of the second branch, and the second branch and the intake port are shaped such that the stored angular momentum of the gases is transferred to the charge in the combustion chamber when the associated intake valve is subsequently opened.

The invention stores not only gases but also angular momentum within the second manifold branches. The stored gases remain in motion during storage and as a result they create a charge having more kinetic energy which ensures better fuel atomisation and faster flame propagation speeds, both these properties being of importance in lean burn engines.

### Brief description of the drawings

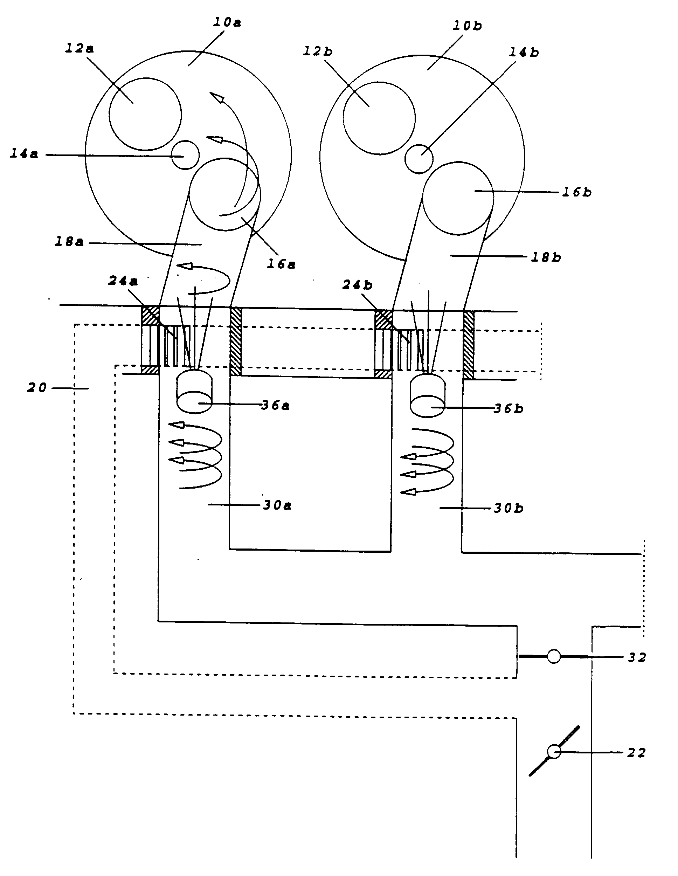

The invention will now be described further, by way of example, with reference to the accompanying drawing, which is a schematic representation of two cylinders of a multi-cylinder engine having an intake system with supply and storage manifolds.

### Detailed description of the referred embodiment

In the drawing two identical cylinders are shown and suffixes a and b have been added to the reference numerals to distinguish the cylinders from each other. The suffixes will herein be omitted where the description applies equally to all cylinders.

Each cylinder 10 has an intake valve 16, an exhaust valve 12 and a spark plug 14. The intake port 18 leading to the intake valve 16 is connected at the side of the cylinder head to two manifolds branches 20 and 30. The branches 30 form part of a storage manifold, as will be described further below, and the branches 20 form part of a supply manifold that connects the cylinders 10 to the ambient air through a butterfly throttle 22 by means of which the engine load is set. The connection 24 between the two branches is designed such that air entering from the branches 20 of the supply manifold into the branches 30 of the storage manifold swirls in the direction represented by the arrows. Fuel is introduced by means fuel injectors 36 directly into the intake ports 18 downstream of the connection 24 between the branches 20 and 30. The plenum of the storage manifold can be connected to the ambient air through a further butterfly throttle 32 which may either be used as an ON/OFF valve that is opened only during high load or as continuously variable throttle.

When the throttle 32 is continuously variable, it is preferred for it to be ganged for movement with the main supply throttle 22. In this way, at low engine loads, most of the air will enter the combustion chambers by travelling along the branches 20 of the first manifold so as to produce a high swirl that is stored in the branches 30 of the storage manifold. As the load is increased the proportion reaching the cylinders directly by flowing along the branches 30 of the storage manifold is progressively increased thereby reducing the swirl with increased engine load. Under idling conditions, both the main throttle 22 and the throttle 32 will be fully closed but only the main throttle 22 will be bypassed by the idle speed control valve so that all the idle air will reach the combustion chambers by flowing along the branches 20 and the junctions 24 to enter the combustion chambers with maximum swirl.

The cylinders 10a and 10b are illustrated with the intake valve 16a open and the intake valve 16b closed. Considering first the cylinder 10b, its intake branch 30b will be under vacuum because one of the cylinders of the engine, in this case the cylinder 10a, will be in its intake stroke. Because of the manifold vacuum in the branch 30b, air will be drawn in from the supply branch 20 through the connection 24b and this air, being unable to enter the cylinder 10b through the closed intake valve 16b, will back-fill the branch 30b of the storage manifold. Because the air is tangentially directed by the connection 24b into the storage branch 30b, the stored air will take the form of a vortex as represented by the arrows. This condition will prevail for three out of the four strokes of the engine cycle, the storage manifold vacuum being maintained by different cylinders during different strokes of the engine cycle.

When the intake valve opens, as is the case for the illustrated cylinder 10a, a proportion of the air charge for the cylinder will be drawn directly from the supply branch 20 and will enter the cylinder 10a with its swirling motion. The remainder of the charge will be drawn in from the branch 30a of the storage manifold and this too will have stored angular momentum. As a result the intake charge will have a large amount of kinetic energy which is known to be desirable for lean burn operation.

The gases drawn into the storage branch 30 from the supply branch 20 while the intake valve is closed will also have the effect of stirring the gases trapped in the intake port 18 and thereby assist in preventing the formation of fuel pools in the intake port.

Because angular momentum is a vector and has a fixed direction, it is lost if a gas stream is bent or forced to undergo a sudden change in direction. For this reason it is desirable to align the storage branch 30 with the intake port 18 as much as possible and to ensure that the branch 30 should have a straight section with sufficient volume to store a volume of charge comparable with the displacement volume of the cylinder 10.

Assuming that the cross-section areas of the supply branches 20 are in the region of 25% of the intake valve area, that should suffice to meet the full load condition of operation. In practice the engine will not breathe as efficiently in this case because of increased resistance in the intake system and it is necessary for the butterfly valve 32 to be open to allow maximum breathing. As earlier described, the throttle 32 may be an ON/OFF valve but it is preferred for it to open progressively as the main throttle 22 is opened.

It will be clear that the invention seeks to maximise the charge kinetic energy by storing a vortex and that consequently the shape of the manifolds should be optimised to conserve the vortex. Hence the storage branches 30 and the intake ports 18 should have a round cross-section and changes in diameter should be progressive. The connection 24 should also be designed to ensure that the axis of the vortex is parallel to the axis of the storage branches 30.

## Claims

1. A multi-cylinder internal combustion engine having two intake port branches (20,30) supplying each intake valve (16), the first branch (20) being connected to the common plenum of an air supply manifold connected to ambient air by a supply throttle (22) and the second branch (30) being connected to the common plenum of a charge storage manifold, wherein in use air is drawn from the supply manifold and is stored in the branch (30) of the storage manifold when the associated intake valve (16) is closed and fuel is injected directly into the intake port (18), downstream of the connection (24) between the two branches, wherein the connection (24) between the branches (20,30) of the two manifolds is such that the air drawn from the first branch (20) into the second branch (30) swirls while in storage, the connection (24) being designed to ensure that the axis of the swirl is parallel to the axis of the second branch (30), and the second branch (30) and the intake port (18) are shaped such that the stored angular momentum of the gases is transferred to the charge in the combustion chamber when the associated intake valve (16) is subsequently opened.

2. An engine as claimed in claim 1, wherein the engine is four stroke engine and the volume of the branches (30) of the storage manifold lying between the intake port (18) and the common plenum is in excess of 50% of the displacement volume of the combustion chamber.

3. An engine as claimed in claim 1 or 2, in which at the connection (24) between the first branch (20) and the second branch (30), the flow from the first branch (20) is directed tangentially with respect to the axis of the second branch (30).

4. An engine as claimed in claim 3, wherein the storage branches (30) and the engine intake ports (18) have a round cross-section and are substantially in alignment with one another, any changes in diameter and direction of flow in the intake ports (18) and the storage branches (30) being progressive.

5. An engine as claimed in any preceding claim, wherein a second throttle (32) is provided to supply air directly from the supply throttle (22) into the common plenum of the storage manifold to improve breathing under high load operating conditions of the engine.

6. An engine as claimed in claim 5, wherein the second throttle (32) has a continuously variable flow cross-section and is ganged for movement with the main supply throttle (22) to vary the relative proportions of the intake air reaching the cylinder by way of the respective manifolds.

7. An engine as claimed in claim 6, wherein for idle operation both the second throttle (32) and the main supply throttle (22) can be moved into a fully closed position, and an idle speed control valve is provided to bypass the main supply throttle (22).

## Patentansprüche

1. Eine Multizylinder-Brennkraftmaschine mit zwei Einlassöffnungs-Abzweigungen (20, 30), die jeweils ein Einlassventil (16) versorgen, wobei dieerste Abzweigung (20) an die gemeinsame Kammer eines Luft-Ansaugkrümmers angeschlossen ist, die mit der Umgebungsluft durch eine Versorgungs-Drosselklappe (22) verbunden ist und die zweite Abzweigung (30) mit der gemeinsamen Kammer eines Ladungs-Speicherkrümmers verbunden ist, in der im Betrieb Luft von dem Ansaugkrümmer angesaugt und in der Abzweigung (30) des Speicherkrümmers gespeichert wird, wenn das entsprechende Einlassventil (16) geschlossen ist und Kraftstoff direkt in die Einlassöffnung (18) eingespritzt wird, unterhalb des Anschlusses (24), zwischen den beiden Abzweigungen, in der die Verbindung (24) zwischen den Abzweigungen (20, 30) der beiden Leitungen derartig gestaltet ist, dass die von der ersten Abzweigung (20) in die zweite Abzweigung (30) gesaugte Luft wirbelt, während sie gespeichert wird, wobei der Anschluss (24) derartig ausgelegt ist, dass er gewährleistet, dass die Achse des Wirbels parallel zur Achse der zweiten Abzweigung (30) ist und die zweite Abzweigung (30) und die Einlassöffnung (18) derartig geformt sind, dass die gespeicherte Winkel-Schwungkraft der Gase an die Ladung in der Verbrennungskammer geleitet wird wenn das entsprechende Einlassventil (16) danach geöffnet ist.

2. Eine Brennkraftmaschine nach Anspruch 1, in der die Brennkraftmaschine ein Viertaktmotor ist und wobei das Volumen der Abzweigungen (30) des Speicherkrümmers zwischen der Einlassöffnung (18) liegt und die gemeinsame Kammer in 50 %igem Überschuss des Hubraumvolumens der Verbrennungskammer ist.

3. Eine Brennkraftmaschine nach Anspruch 1 oder 2, in der am Anschluss (24) zwischen der ersten Abzweigung (20) und der zweiten Abzweigung (30) der Strom von der ersten Abzweigung (20) tangentiell im Verhältnis zur Achse der zweiten Abzweigung (30) gelenkt wird.

4. Eine Brennkraftmaschine nach Anspruch 3, in der die Speicherabzweigungen (30) und die Einlassöffnungen (18) des Motors einen runden Querschnitt haben und danach miteinander gleichgerichtet sind, wobei irgendwelche Veränderungen des Durchmessers und der Richtung des Stroms in den Einlassöffnungen (18) und den Speicherabzweigungen (30) progressiv stattfinden.

5. Eine Brennkraftmaschine nach irgendeinem der vorausgegangenen Ansprüche, in der eine zweite Drosselklappe (32) geliefert wird, um Luft direkt von der Versorgungs-Drosselklappe (22) an die gemeinsame Kammer des Speicherkrümmers zu liefern, um die Belüftung beim Betrieb mit hoher Ladung des Motors zu verbessern.

6. Eine Brennkraftmaschine nach Anspruch 5, in der eine zweite Drosselklappe (32) einen ständig verstellbaren Stromquerschnitt hat und in der Bewegung mit der Hauptversorgungs-Drosselklappe (22) kombiniert ist, um die verhältnismässigen Anteile der Einlassluft, die den Zylinder erreicht, durch die entsprechenden Leitungen zu verändern.

7. Eine Brennkraftmaschine nach Anspruch 6, in der im Leerlauf die zweite Drosselklappe (32) und die Hauptversorgungs-Drosselklappe (22) in eine vollkommen geschlossene Stellung bewegt werden können und ein Leerlauf-Steuerventil geliefert wird, um die Hauptversorgungs-Drosselklappe (22) zu umgehen.

## Revendications

1. Moteur à combustion interne à cylindres multiples présentant deux branches (20, 30) de conduit d'admission alimentant chaque soupape d'admission (16), la première branche (20) étant connectée au plénum commun d'un collecteur d'alimentation en air connecté à l'air ambiant par un étrangleur d'alimentation (22), et la seconde branche (30) étant connectée au plénum commun d'un collecteur de stockage de charge, dans lequel en pratique l'air est amené depuis le collecteur d'alimentation et est stocké dans la branche (30) du collecteur de stockage lorsque la soupape d'admission associée ( 16) est fermée et le carburant est injecté directement dans le conduit d'admission (18), en aval de la connexion (24) entre les deux branches, dans lequel la connexion (24) entre les branches (20, 30) des deux collecteurs est telle que l'air amené depuis la première branche (20) dans la seconde branche (30) tourbillonne lorsqu'il est stocké, la connexion (24) étant destinée à garantir que l'axe de tourbillon est parallèle à l'axe de la seconde branche, et la seconde branche (30) et le conduit d'admission(18) ont une forme telle que le moment cinétique stocké par les gaz est transféré à la charge dans la chambre de combustion lorsque la soupape d'admission associée (16) est ouverte par la suite.

2. Moteur selon la revendication 1, dans lequel le moteur est un moteur à quatre temps et le volume des branches (30) du collecteur de stockage se trouvant entre le conduit d'admission (18) et le plénum commun est supérieur à 50% du volume de déplacement de la chambre de combustion.

3. Moteur selon la revendication 1 ou 2, dans lequel, à la connexion (24) entre la première branche (20) et la seconde branche (30), l'écoulement depuis la première branche (20) est dirigé de manière tangentielle par rapport à l'axe de la seconde branche (30).

4. Moteur selon la revendication 3, dans lequel les branches de stockage (30) et les conduits d'admission du moteur (18) présentent une coupe transversale arrondie et sont essentiellement alignés les uns par rapport aux autres, tout changement de diamètre et de direction d'écoulement dans les conduits d'admission (18) et les branches de stockage (30) étant progressif.

5. Moteur selon l'une des revendications précédentes, dans lequel un second étrangleur (32) est fourni pour fournir de l'air directement depuis l'étrangleur d'alimentation (22) dans le plénum commun du collecteur de stockage afin d'améliorer la respiration dans des conditions de fonctionnement en charge élevée du moteur.

6. Moteur selon la revendication 5, dans lequel le second étrangleur (32) présente une coupe transversale continuellement variable et est couplé mécaniquement pour se déplacer avec l'étrangleur d'alimentation principal (22) pour varier les proportions relatives de l'air d'admission atteignant le cylindre au moyen des collecteurs respectifs.

7. Moteur selon la revendication 6, dans lequel pour un fonctionnement en marche à vide, le second étrangleur (32) et l'étrangleur d'alimentation principal (22) peuvent être déplacés dans une position entièrement fermée et une soupape de contrôle de vitesse de ralenti est fournie pour dériver l'étrangleur d'alimentation principal (22).
